# FASCICULE DE BREVET EUROPEEN

(11) **EP 3 399 855 B1**
(45) Date de publication et mention de la délivrance du brevet: **25.11.2020**
(21) Numéro de dépôt: 17702150.8
(22) Date de dépôt: 04.01.2017
(51) Int. Cl.: A01G 9/02, E04C 1/39, E01F 8/02

(54) **MODULE DE CULTURE VÉGÉTALE POUR MUR VÉGÉTALISÉ**
PFLANZENKULTIVIERUNGSMODUL FÜR BEGRÜNTE WAND
PLANT CULTIVATION MODULE FOR GREENING WALL

(30) Priorité: 08.01.2016 CH 272016
(43) Date de publication de la demande: 14.11.2018
(73) Titulaire: Green Sentinel, 1700 Fribourg (CH)
(72) Inventeur: PELESZEZAK, Pascal, 69170 Tarare (FR)
(74) Mandataire: Chevalier, Renaud Philippe
(86) Numéro de dépôt international: PCT/FR2017/050018
(87) Numéro de publication internationale: WO 2017/118813

(56) Documents cités:
- WO-A1-2010/009505
- WO-A1-2011/014124
- WO-A1-2014/097660
- JP-A- 2014 064 517
- JP-A- 2014 195 423
- US-A1- 2014 096 446
- US-A1- 2015 082 698
- US-B1- 7 926 224

## Description

La présente invention se rapporte à un module de culture végétale pour l'érection d'une structure modulaire de mur végétalisé, ainsi qu'à une structure modulaire de mur végétalisé intégrant plusieurs de ces modules.

L'invention se situe dans le domaine de la construction de murs végétalisés, pouvant servir notamment de mur d'embellissement urbain, de mur anti-bruit ou anti-éblouissement, de muret bordant une voie de circulation ou une piste cyclable, de barrière de sécurité, de mur de façade pour bâtiment, de mur de dépollution de l'air, de mur d'isolation thermique, de mur maraîcher, etc.

Il est ainsi connu, du document FR 3 003 430, d'employer un module de culture végétale comprenant un casier prévu pour recevoir intérieurement un substrat de culture végétale, ainsi qu'une paroi de fond perméable, notamment du type paroi grillagée, poreuse ou ajourée, disposée dans le fond du casier, c'est-à-dire sur sa face inférieure, afin de former une étagère horizontale de retenue du substrat. Cette paroi de fond recouvre ainsi intégralement toute la face inférieure du casier.

Une fois qu'un module dit supérieur est superposé au-dessus d'un autre module dit inférieur, la paroi de fond du module supérieur retient le substrat contenu dans son casier, évitant un tassement sur la hauteur du mur végétalisé qui conduirait un appauvrissement en substrat du module supérieur.

Cependant, le Demandeur a observé un phénomène dommageable, à savoir la constitution d'une lame d'air en-dessous de la paroi de fond du module supérieur, du fait du tassement du substrat dans le module inférieur. Une telle lame d'air représente ainsi une rupture dans la distribution verticale du substrat au sein du mur. Autrement dit, le substrat contenu dans le module supérieur est séparé du substrat contenu dans le module inférieur par cette lame d'air.

Or, cette rupture dans la distribution verticale du substrat s'avère préjudiciable au développement des plantes au sein du mur.

L'état de la technique est également illustré par l'enseignement du document WO 2014/097660 qui divulgue un dispositif de purification d'atmosphère qui comprend un module ou casier recevant un substrat, où ce module présente un panneau arrière, une paroi perméable arrière espacé du panneau arrière pour délimiter une couche de circulation d'air, une paroi perméable avant traversée par les plantes, où le substrat est maintenu entre la paroi perméable arrière et la paroi perméable avant, et des plateaux de support pour supporter le substrat à l'intérieur du compartiment entre la paroi perméable arrière et la paroi perméable avant. Cependant, cet art antérieur présente les mêmes inconvénients que précités, car le substrat est maintenu à la fois entre les parois verticales perméables avant et arrière et sur les plateaux de support, et ces plateaux de support s'étendent sur toute la largeur entre les parois verticales, de sorte qu'un tassement du substrat sous les plateaux de support conduira obligatoirement à des lames d'air sous ces plateaux de support et donc à une inhomogénéité du substrat dans la hauteur du module et du mur.

US 2014/096446 A1, US 2015/082698 A1 et JP 2014 064517 A illustrent d'autres modules de culture végétale pour exemple.

L'invention vise à résoudre cet inconvénient, en proposant un module qui permette d'obtenir une continuité homogène dans la distribution verticale du substrat au sein du mur, sans rupture entre les modules.

A cet effet, elle propose un module de culture végétale pour l'érection d'une structure modulaire pour mur végétalisé, ledit module étant conforme à la revendication 1.

Ainsi, chaque paroi de retenue s'étend sur une partie de la largeur du module (cette largeur du module correspondant à la distance entre les deux cadres ou à la distance entre les faces arrière et avant du casier), de sorte que la lame d'air qui se formera nécessairement en-dessous de la paroi de retenue (du fait du tassement du substrat) ne s'étendra pas sur toute la largeur du substrat, évitant ainsi une rupture dans la distribution verticale du substrat.

En outre, les deux parois de retenue sont décalées verticalement et transversalement, de sorte que ces décalages favorisent la distribution homogène du substrat dans la hauteur et la largeur du module, et donc dans la verticalité du mur.

Les parois de retenue peuvent être horizontales, ou bien présenter une inclinaison par rapport à l'horizontale, et notamment une inclinaison de 45 degrés maximum.

Dans une réalisation particulière, le cadre avant et le cadre arrière présentent chacun deux poutres respectivement inférieure et supérieure reliées par deux montants latéraux opposés, et les montants latéraux des cadres présentent des éléments de support conformés pour soutenir une paroi de retenue, et où au moins une paroi de retenue dite intermédiaire présente un premier bord longitudinal soutenu par les deux montants latéraux d'un même cadre au moyen desdits éléments de support.

Ainsi, cette paroi de retenue intermédiaire est avantageusement prévue à un niveau intermédiaire entre la face inférieure et la face supérieure du casier.

Avantageusement, chaque élément de support est constitué d'une pièce fendue solidaire du montant latéral concerné et délimitant une fente de réception d'un premier bord longitudinal d'une paroi de retenue intermédiaire, ladite paroi de retenue intermédiaire présentant un premier bord longitudinal engagé dans les fentes des pièces fendues des deux montants latéraux d'un même cadre.

Dans une réalisation particulière, les éléments de support sont prévus sensiblement à mi-hauteur entre les faces inférieure et supérieure du casier.

Selon une autre caractéristique, les poutres supérieures des deux cadres et les traverses supérieures présentent des rebords internes sensiblement coplanaires et définissant ensemble un palier interne de support d'une paroi de retenue dite supérieure.

Ainsi, une paroi de retenue supérieure pourra avantageusement être disposée sur la face supérieure du casier.

Dans un premier mode de réalisation, une paroi de retenue présente un premier bord longitudinal soutenu par les deux montants latéraux de l'un des cadres, et une autre paroi de retenue présente un premier bord longitudinal reposant sur le rebord interne d'une poutre supérieure de l'autre cadre et présente également deux bords latéraux opposés reposant sur les rebords internes respectifs des traverses supérieures, de sorte que ces deux parois de retenue ne pas superposées verticalement directement l'une au-dessus de l'autre.

Dans ce premier mode de réalisation, il est avantageux que la largeur de chaque paroi de retenue est comprise entre environ 0,35 et 0,65 fois la distance entre les deux cadres, et de préférence entre 0,45 et 0,55 fois la distance entre les deux cadres.

Dans un second mode de réalisation, le module comprend en outre deux cloisons centrales s'étendant à l'intérieur du casier entre ses traverses inférieures et supérieures et de manière substantiellement parallèle aux faces arrière et avant, ces cloisons centrales étant situées à distance des deux cadres et délimitant entre elles un espace central dénué de substrat, et chaque paroi de retenue présente une largeur qui est inférieure à la distance entre un cadre et la cloison centrale directement en vis-à-vis dudit cadre, et une paroi de retenue intermédiaire présente un premier bord longitudinal soutenu par les deux montants latéraux de l'un des cadres et un second bord longitudinal libre de sorte que ladite paroi de retenue intermédiaire s'étend à partir de l'un des cadres sans atteindre ladite cloison centrale directement en vis-à-vis dudit cadre, et une paroi de retenue supérieure présente un premier bord longitudinal sensiblement jointif de ladite cloison centrale et présente également deux bords latéraux opposés reposant sur les rebords internes respectifs des traverses supérieures, de sorte que ces deux parois de retenue ne pas superposées verticalement directement l'une au-dessus de l'autre.

Du fait de la présence des cloisons centrales, chaque module délimite un sous-compartiment arrière de réception de substrat entre la face arrière et la cloison centrale concernée, ainsi qu'un sous-compartiment avant de réception de substrat entre la face extérieur et l'autre cloison centrale ; l'espace central entre les deux cloisons centrales étant quant à lui dénué de substrat. Ainsi, les parois de retenue doivent être plus courtes pour ne pas s'étendre sur toute la largeur du sous-compartiment arrière et/ou du sous-compartiment avant, dans le but d'éviter une rupture dans la distribution verticale du substrat au sein des sous-compartiments arrière et/ou des sous-compartiments avant des modules superposés.

Ces cloisons centrales peuvent être ajourées ou grillagées, et délimitées entre elles un espace central de circulation d'air prévu pour être raccordé à au moins un conduit d'amené d'air pulsé, favorisant ainsi la dépollution de l'air à travers le module. En variante, les cloisons centrales sont pleines, et notamment renforcées ou blindées.

Conformément à une caractéristique de l'invention, une paroi de retenue intermédiaire est supportée par le cadre arrière et s'étend (à l'intérieur du sous-compartiment arrière) sans atteindre la cloison centrale directement en vis-à-vis dudit cadre arrière, et une autre paroi de retenue intermédiaire est supportée par le cadre avant et s'étend (à l'intérieur du sous-compartiment avant) sans atteindre l'autre cloison centrale directement en vis-à-vis dudit cadre avant.

Dans ce second mode de réalisation, il est avantageux que la largeur de chaque paroi de retenue est comprise entre environ 0,35 et 0,65 fois la distance entre un cadre et la cloison centrale directement en vis-à-vis dudit cadre, et de préférence entre 0,45 et 0,55 fois cette distance entre un cadre et la cloison centrale directement en vis-à-vis dudit cadre.

La présente invention concerne également la caractéristique selon laquelle les poutres supérieures des deux cadres et les traverses supérieures présentent des rebords internes sensiblement coplanaires et définissant ensemble un palier interne de support d'une paroi de retenue, où une paroi de retenue intermédiaire présente un premier bord longitudinal soutenu par les deux montants latéraux de l'un des cadres et s'étend sans atteindre la cloison centrale directement en vis-à-vis dudit cadre, et où une autre paroi de retenue dite supérieure présente un premier bord longitudinal sensiblement jointif de ladite cloison centrale et présente également deux bords latéraux opposés reposant sur les rebords internes respectifs des traverses supérieures, de sorte que ces deux parois de retenue ne pas superposées verticalement directement l'une au-dessus de l'autre.

L'invention se rapporte également à une structure modulaire de mur végétalisé selon la revendication 11, cette structure comprenant plusieurs modules conformes à l'invention, ces modules étant juxtaposés en au moins une rangée horizontale et/ou superposés en au moins une colonne verticale.

Selon une possibilité, au moins deux modules sont juxtaposés et présentent des parois de retenue respectives substantiellement coplanaires, et de préférence jointives. Ainsi, le substrat présente une distribution continue et homogène horizontalement.

Selon une autre possibilité, au moins deux modules sont superposés et présentent des parois de retenue voisines respectives décalées verticalement et transversalement, de sorte que ces deux parois de retenue voisines (c'est-à-dire qu'il n'y a pas de paroi de retenue placée verticalement entre elles) ne sont pas superposées verticalement directement l'une au-dessus de l'autre.

D'autres caractéristiques et avantages de la présente invention apparaîtront à la lecture de la description détaillée ci-après, d'exemples de mise en œuvre non limitatifs, faite en référence aux figures annexées dans lesquelles :
- la figure 1 est une vue schématique en perspective d'un casier pour un module conforme à l'invention ;
- la figure 2 est une vue schématique en perspective et en éclatée du casier de la figure 1 ;
- la figure 3 est une vue schématique de côté d'un premier module conforme à l'invention, ce premier module comprenant le casier de la figure 1 (avec du substrat), une paroi de retenue supérieure et une paroi de retenue intermédiaire ;
- la figure 4 est une vue schématique de face de deux premiers modules juxtaposés et conformes à la figure 3 ;
- la figure 5 est une vue schématique de côté de trois premiers modules superposés ;
- la figure 6 est une vue schématique en perspective d'un ensemble de murs végétalisés intégrant des premiers modules superposés et juxtaposés, où un système d'aspiration d'air à hélice est prévu intérieurement dans un espace fermé par de tels murs végétalisés ;
- la figure 7 est une vue schématique en perspective d'un deuxième module conforme à l'invention, ce deuxième module comprenant le casier de la figure 1 avec deux cloisons centrales et des parois de retenue disposées de part et d'autre de ces cloisons centrales ;
- la figure 8 est une vue schématique en perspective d'un deuxième module, où les cloisons centrales sont ajourées ou grillagées pour former un plénum central connecté intérieurement à une pompe à air via un assemblage de conduits d'amené d'air pulsé, les parois de retenue n'étant pas ici illustrées ;
- la figure 9 est une vue schématique en perspective de la pompe à air et de l'assemblage de conduits d'amené d'air pulsé, pour le deuxième module de la figure 8 ;
- la figure 10 est une vue schématique en perspective de deux deuxièmes modules juxtaposés, avec plenum central, les parois de retenue n'étant pas ici illustrées ;
- la figure 11 est une vue schématique en perspective de quatre deuxièmes modules superposés, chaque module intégrant des parois de retenue disposées de part et d'autre des cloisons centrales ;
- la figure 12 est une vue schématique en perspective de trois deuxièmes modules superposés, avec plenum central, chaque deuxième module intégrant des parois de retenue disposées de part et d'autre des cloisons centrales ;
- la figure 13 est une vue schématique en perspective de quatre deuxièmes modules, où les cloisons centrales réceptionnent intérieurement un isolant, ces cloisons centrales pouvant être pleines, grillagées ou ajourées, et du substrat étant incorporé de part et d'autre des cloisons centrales ; et
- la figure 14 est une vue schématique en perspective de quatre deuxièmes modules, où les cloisons centrales réceptionnent intérieurement un isolant, ces cloisons centrales pouvant être pleines, grillagées ou ajourées, et du substrat étant incorporé d'un côté des cloisons centrales et du béton étant incorporé de l'autre côté des cloisons centrales.

Un module 1 conforme à un exemple de réalisation de l'invention, comprend un casier 2 de forme parallélépipédique, prévu pour recevoir intérieurement un substrat SU de culture végétale.

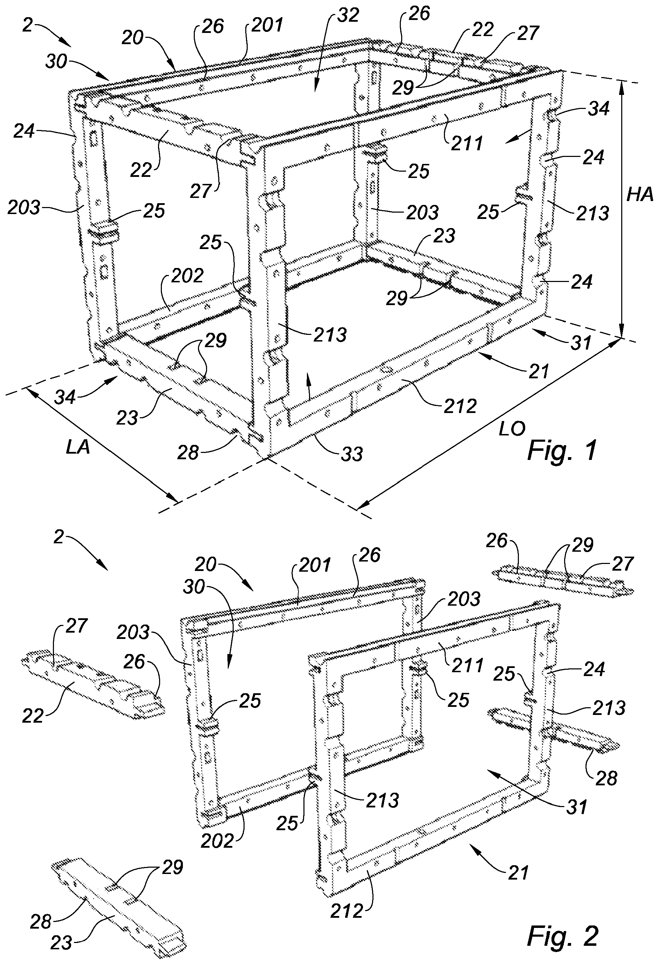

En référence aux figures 1 et 2, ce casier 2 comprend :
- un cadre avant 20 de forme rectangulaire et formé de l'assemblage de deux poutres respectivement supérieure 201 et inférieure 202 reliées par deux montants latéraux 203 opposés, ces poutres 201, 202 et ces montants 203 formant les arêtes du cadre avant 20 ;
- un cadre arrière 21 de forme rectangulaire et formé de l'assemblage de deux poutres respectivement supérieure 211 et inférieure 212 reliées par deux montants latéraux 213 opposés, ces poutres 211, 212 et ces montants 213 formant les arêtes du cadre arrière 21 ;
- des traverses supérieures 22 reliant les cadres 20, 21 entre eux, ces traverses supérieures 22 s'étendant entre les extrémités respectives des poutres supérieures 201, 211 ;
- des traverses inférieures 23 reliant les cadres 20, 21 entre eux, ces traverses inférieures 23 s'étendant entre les extrémités respectives des poutres inférieures 202, 212.

Les cadres 20, 21 sont identiques et les traverses 22, 23 sont identiques. Comme visible sur la figure 2, le casier 2 peut être réalisé par emboîtement des traverses 22, 23 sur les cadres 20, 21, par assemblage du type tenon et mortaise. A ce titre, les extrémités des traverses 22, 23 portent des tenons qui s'engagent dans des mortaises prévues aux quatre coins de chaque cadre 20, 21.

Le casier 2 présente ainsi six faces externes deux à deux opposées :
- une face avant 30 et une face arrière 31 délimitées respectivement par le cadre avant 20 et par le cadre arrière 21 ;
- une face supérieure 32 délimitée par les poutres supérieures 201, 211 et les traverses supérieures 22, et une face inférieure 33 délimitée par les poutres inférieures 202, 212 et les traverses inférieures 23 ;
- deux faces latérales 34 délimitées chacune par deux montants 203 de deux cadres 20, 21, une traverse supérieure 22 et une traverse inférieure 23.

La largeur LA du casier 2 correspond à la distance entre les deux cadres 20, 21, ou à la distance entre les faces arrière 31 et avant 30, ce qui correspond substantiellement à la longueur d'une traverse 22 ou 23.

La longueur LO du casier 2 correspond à la distance entre les deux faces latérales 34, ce qui correspond substantiellement à la longueur d'une poutre 201, 202, 211 ou 212.

La hauteur HA du casier 2 correspond à la distance entre les faces supérieure 32 et inférieure 33, ce qui correspond substantiellement à la longueur d'un montant 203 ou 213.

Il est à noter que, au sens de l'invention, la largeur du casier 2 peut être inférieure, égale ou supérieure à la longueur du casier 2.

Les montants 203, 213 présentent chacun des encoches 24, substantiellement semi-circulaires, sur l'extérieur du casier 2 et prévues sur les faces arrière 31 et avant 30. Ces encoches 24 sont alignées entre deux montants 203, 213 d'un même cadre 20, 21 et sont prévues pour recevoir des tuyaux 72 d'irrigation du substrat.

Les montants 203, 213 présentent chacun une pièce fendue 25 sur l'intérieur du casier 2 et délimitant une fente parallèle aux faces supérieure 32 et inférieure 33. Ainsi, deux montant 203, 213 délimitant une même face latérale 34 ont leurs pièces fendues 25 respectives qui se font face. Les quatre pièces fendues 25 sont toutes situées à la même hauteur vis-à-vis de la face inférieure 33. En l'occurrence, ces pièces fendues 25 sont prévues sensiblement à mi-hauteur entre les faces inférieure 33 et supérieure 32 du casier 2. Comme expliqué ci-après, ces pièces fendues 25 sont prévues pour supporter des parois de retenue intermédiaires 41.

Les poutres supérieures 201, 211 et les traverses supérieures 22 présentent des rebords internes 26 sensiblement coplanaires qui définissent ensemble un palier interne rectangulaire. Comme expliqué ci-après, ces rebords internes 26 sont prévues pour supporter une paroi de retenue supérieure 42.

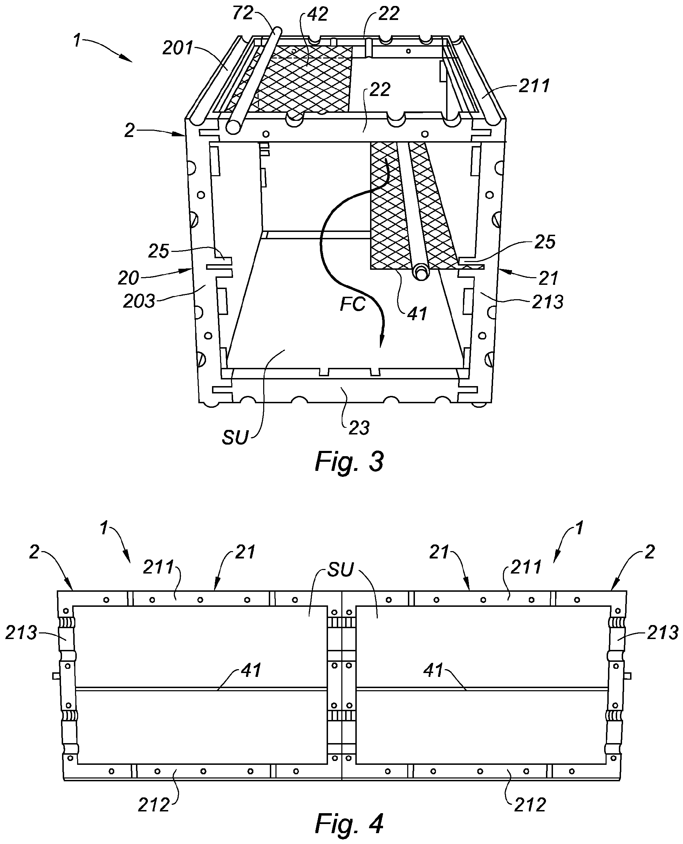

Les traverses supérieures 22 présentent chacune des encoches 27, substantiellement semi-circulaires, sur l'extérieur du casier 2 et prévues sur la face supérieure 32. Ces encoches 27 sont alignées et sont prévues pour recevoir des tuyaux 72 d'irrigation du substrat (comme visible sur les figures 3, 8 et 11).

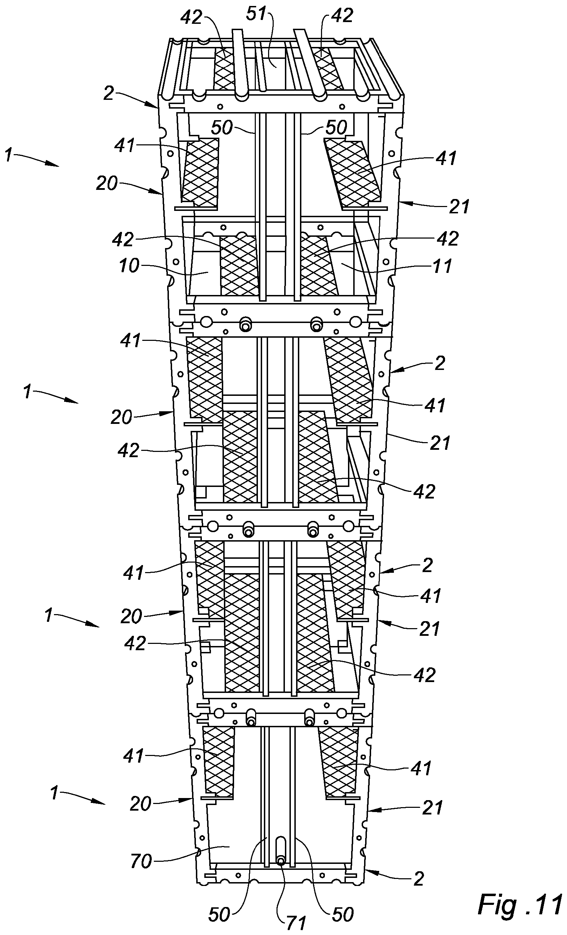

Les traverses inférieures 23 présentent chacune des encoches 28, substantiellement semi-circulaires, sur l'extérieur du casier 2 et prévues sur la face inférieure 33. Ces encoches 28 sont alignées et sont prévues pour recevoir des tuyaux 72 d'irrigation du substrat (comme visible sur la figure 11).

Chaque traverse 22, 23 présente également deux fentes 29, parallèles aux faces arrière 31 et avant 30, sur l'intérieur du casier 2 ; une fente 29 étant disposée à une distance donnée de la face arrière 31, et l'autre fente 29 étant disposée à la même distance de la face avant 30, les deux fentes 29 étant écartées l'une de l'autre. Comme expliqué ci-après, ces pièces fendues 25 sont prévues pour recevoir et maintenir des cloisons centrales 50 d'un plenum central 5.

Le module 1 comprend également au moins deux parois de retenue 41, 42 perméables, notamment du type paroi grillagée, poreuse ou ajourée, portées par le casier 2 et s'étendant sensiblement parallèlement à l'une des faces inférieure 33 et supérieure 32, chaque paroi de retenue 41, 42 étant prévue pour former une étagère horizontale de retenue du substrat SU sur substantiellement toute la longueur LO du casier 2.

Dans un premier mode de réalisation illustré sur les figures 3 à 5, avec un module 1 ne comprenant pas de plenum central, le module 1 peut comprendre :
- une paroi de retenue intermédiaire 41 présentant un premier bord longitudinal engagé et maintenu dans les fentes des pièces fendues 25 des deux montants 203 ou 213 de l'un des cadres 20, 21 ; et
- une paroi de retenue supérieure 42 présentant un premier bord longitudinal reposant sur le rebord interne 26 d'une poutre supérieure 201 ou 211 de l'autre cadre 20, 21 et présente également deux bords latéraux opposés reposant sur les rebords internes 26 respectifs des deux traverses supérieures 22.

Chaque paroi de retenue 41, 42 présente des premier et second bords longitudinaux opposés, avec un premier bord longitudinal monté sur l'un des cadres 20 ou 21 (soit dans les pièces fendues 25, soit sur le rebord interne 26 d'une poutre supérieure 201 ou 211) et un second bord longitudinal libre. En effet, chaque paroi de retenue 41, 42 présente une largeur LP prise entre ses premier et second bords longitudinaux qui est inférieure à la largeur LA du casier 2, de sorte que la paroi de retenue 41, 42 s'étend à partir de l'un des cadres 20 (respectivement 21) sans atteindre l'autre cadre 21 (respectivement 20).

Dans le premier mode de réalisation, la largeur LP de la ou chaque paroi de retenue 41, 42 est comprise entre 0,4 et 0,5 fois la largeur LA du casier 2.

Ces deux parois de retenue 41, 42 sont décalées à la fois selon une direction verticale orthogonale aux faces inférieure et supérieure 33, 32 et selon une direction transversale orthogonale aux faces avant et arrière 30, 31.

Comme visible sur la figure 3, le module 1 comprend à la fois une paroi de retenue intermédiaire 41 et une paroi de retenue supérieure 42, avec la paroi de retenue intermédiaire 41 soutenue par les deux montants latéraux de l'un des cadres 20 (ou inversement 21), et la paroi de retenue supérieure 42 reposant sur le rebord interne 26 d'une traverse supérieure 22 de l'autre cadre 21 (ou inversement 20), de sorte que ces deux parois de retenue 41, 42 ne sont pas superposées verticalement directement l'une au-dessus de l'autre. Ainsi, la continuité verticale de la distribution du substrat SU est réalisée en contournant les parois de retenue 41, 42, comme schématisé par la flèche FC.

En référence à la figure 4, lorsque les modules 1 sont juxtaposés en une rangée horizontale, les parois de retenue 41 (ou 42) des deux modules 1 adjacents sont substantiellement coplanaires, et de préférence jointives, afin de former une (ou plusieurs) étagères horizontales de retenue sur toute la longueur de la rangée, garantissant ainsi une continuité horizontale dans la distribution de substrat SU.

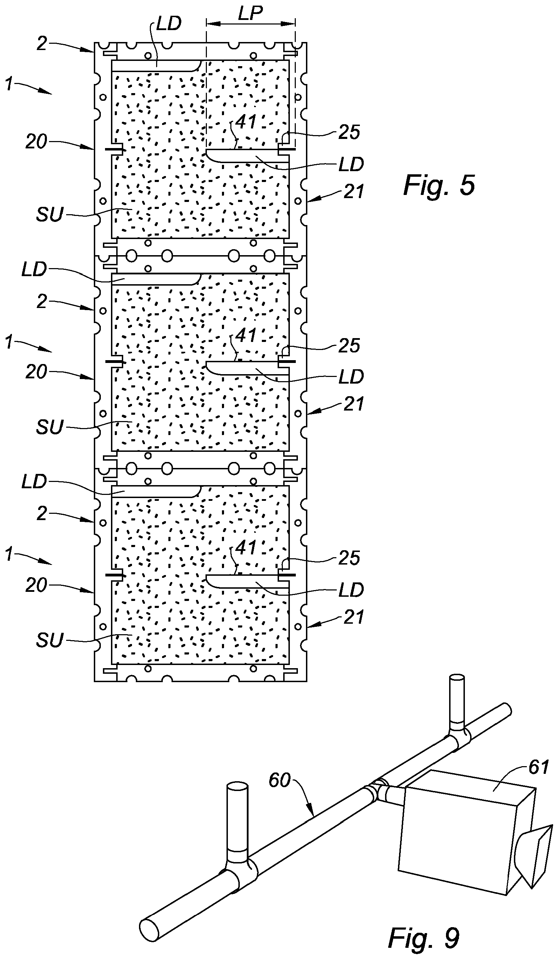

En référence à la figure 5, lorsque les modules 1 sont superposés en une colonne verticale, sont prévus un module 1 du haut, situé en haut de la colonne, un module 1 du bas, situé à la base de la colonne, et au moins un module 1 intermédiaire, intercalé entre les modules 1 du bas et du haut. De plus, deux parois de retenue 41, 42 voisines (c'est-à-dire qu'il n'y a pas de paroi de retenue placée verticalement entre elles) ne sont pas superposées verticalement directement l'une au-dessus de l'autre, comme expliqué ci-dessus, que ces parois de retenue 41, 42 voisines appartiennent au même module 1 ou appartiennent à deux modules 1 superposés.

Sur la figure 5 sont illustrées les lames d'air LD situées sous les parois de retenue 41, 42 ; les parois de retenue supérieures 42 n'étant pas visibles sur cette vue de côté, seules les lames d'air LD situées sous ces parois de retenue supérieures 42 indiquent leurs présences.

Comme visible sur la figure 5, le module 1 du haut présente une unique paroi de retenue intermédiaire 41 partant du cadre arrière 21, le module 1 intermédiaire présente une paroi de retenue supérieure (non visible) partant du cadre avant 20 et également une paroi de retenue intermédiaire 41 partant du cadre arrière 21, et le module 1 du bas présente une paroi de retenue supérieure (non visible) partant du cadre avant 20 et également une paroi de retenue intermédiaire 41 partant du cadre arrière 21. Dans ce cas, la distance verticale entre deux parois de retenue voisines est équivalente à la moitié de la hauteur d'un casier 2.

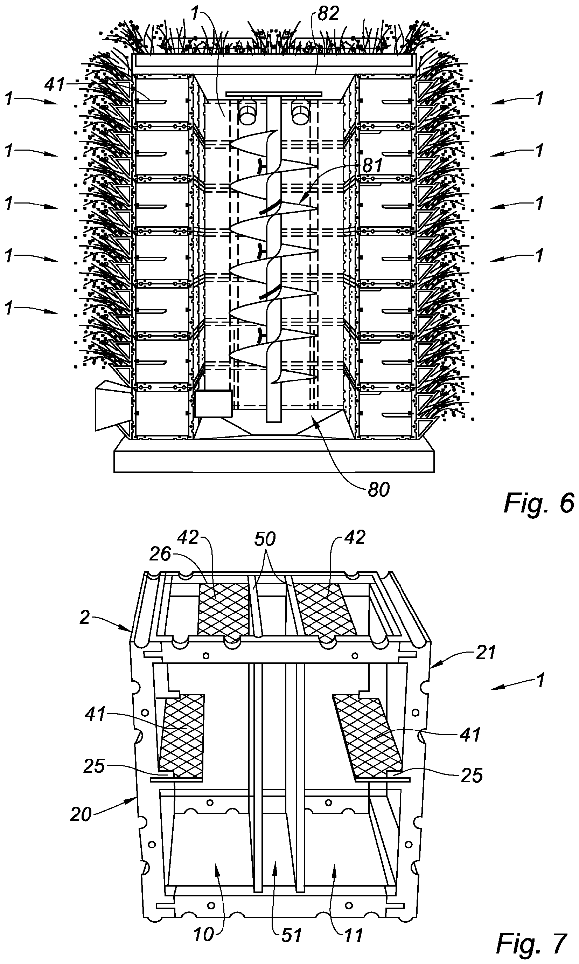

En référence à la figure 6, de tels modules 1 peuvent être érigés pour former un ensemble de murs végétalisés intégrant des modules 1 superposés et juxtaposés. Ces murs délimitent un espace fermé 80 qui reçoit un système d'aspiration d'air à hélice 81 qui assure une mise en dépression à l'intérieur de cet espace fermé 80, afin d'assurer une circulation de l'air à travers les modules 1, et donc à travers les cultures végétales et le substrat SU pour permettre une dépollution de l'air. L'espace fermé 80 est également fermé par un plafond 82 supporté par les modules 1 du haut des murs.

Dans un second mode de réalisation illustré sur les figures 7 à 14, le module 1 comprend deux cloisons centrales 50 s'étendant à l'intérieur du casier 2 entre ses traverses inférieures 23 et supérieures 22 ; ces cloisons centrales 50 étant insérées dans les fentes 29 correspondantes.

Les deux cloisons centrales 50 s'étendent de manière substantiellement parallèle aux faces arrière 31 et avant 30, et ces cloisons centrales 50 délimitent entre elles un espace central 51 dénué de substrat.

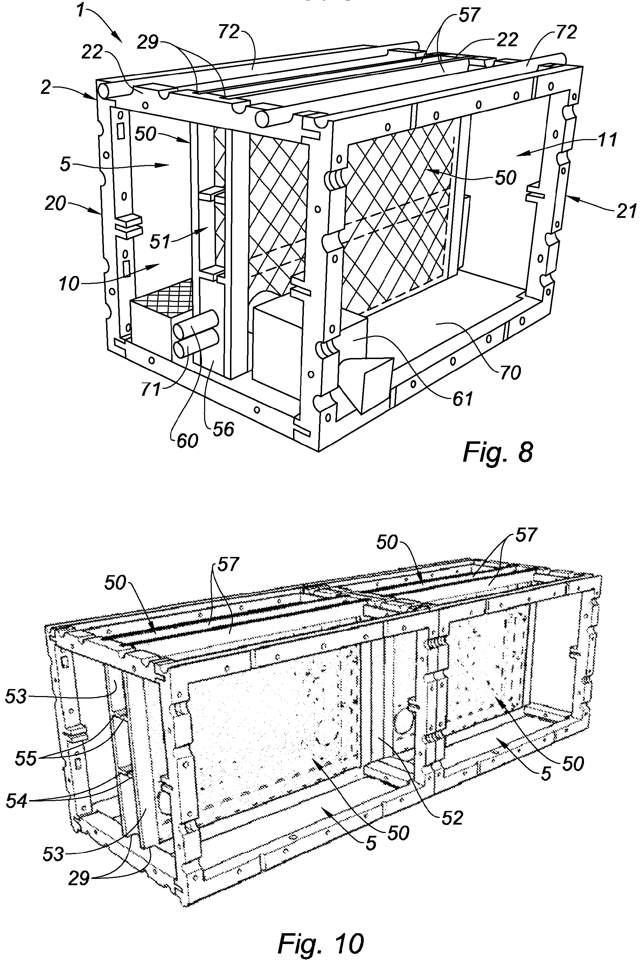

Selon une possibilité illustrée sur les figures 8, 10 et 12, ces deux cloisons centrales 50 sont ajourées ou grillagées et définissent un plenum central 5 en délimitant intérieurement un espace central 51 de circulation d'air prévu pour être raccordé à au moins un conduit 60 d'amené d'air puisé ; ce conduit 60 étant raccordé à une pompe 61 à air qui pompe l'air extérieur pour le distribuer, via le(s) conduit(s) 60, dans les espaces centraux 51 des modules 1.

Selon une autre possibilité, ces deux cloisons centrales 50 sont pleines, et peuvent notamment être renforcées ou blindées afin de former par exemple des cloisons de protection contre des tirs de balles et/ou des explosions.

Du fait de la présence des cloisons centrales 50, le casier 2 délimite un sous-compartiment arrière 11 entre la face arrière 31 et la cloison centrale 50 concernée (c'est-à-dire celle qui est la plus proche de cette face arrière 31), ainsi qu'un sous-compartiment avant 10 entre la face avant 30 et l'autre cloison centrale 50 (c'est-à-dire celle qui est la plus proche de cette face avant 30). L'espace central 51, entre les deux cloisons centrales 50, est quant à lui dénué de substrat.

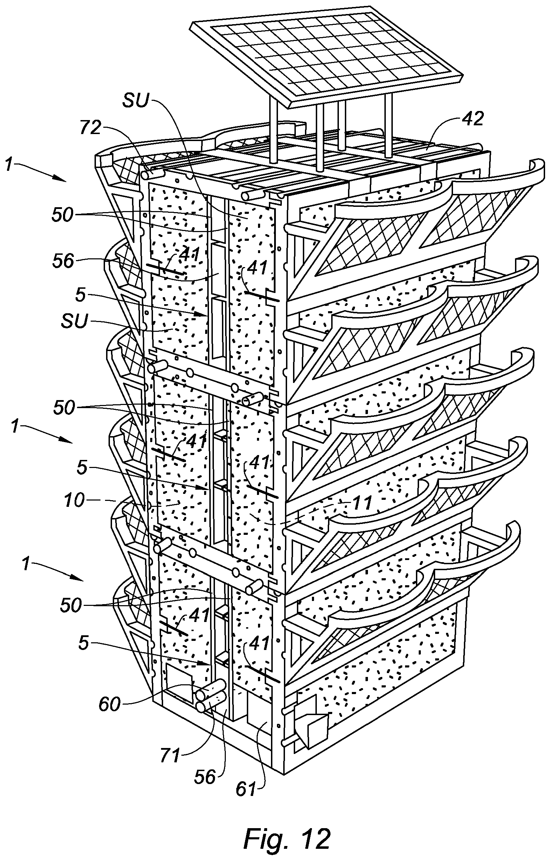

Dans le cas où les deux cloisons centrales 50 forment un plenum central 5, le sous-compartiment arrière 11 et le sous-compartiment avant 10 sont tous les deux prévus pour recevoir du substrat SU, ainsi que visible sur la figure 12.

En référence à la figure 10, lorsque les modules 1 sont juxtaposés en une rangée horizontale, les cloisons centrales 50 des deux modules 1 adjacents sont substantiellement coplanaires et sont jointes, bord à bord, par des platines de fermeture 52 prévues pour assurer la continuité et l'étanchéité des espaces centraux 51 sur toute la longueur de la rangée, garantissant ainsi une continuité horizontale des espaces centraux 51, et donc une continuité horizontale dans la distribution de l'air à l'intérieur des cloisons centrales 50 lorsque ces dernières forment un plenum central 5.

Il est à noter que les cloisons centrales 50 présentent, sur leurs bordures verticales 53, un palier bas 54 et un palier haut 55 internes (un palier haut 55 et un palier bas 54 à droite, et un palier haut 55 et un palier bas 54 à gauche), qui servent de support pour des éventuels blocs de mousse isolante 56 qui seraient intercalés entre les cloisons centrales 50, à l'intérieur de l'espace central 51.

Comme visible sur la figure 8, les cloisons centrales 50 présentent des bordures horizontales 57 qui viennent en arasement avec les faces arrière 31 et avant 30 respectives, de sorte que, lorsque deux modules 1 sont superposés, les cloisons centrales 50 des deux modules 1 sont jointives, assurant la continuité et l'étanchéité des espaces centraux 51 sur toute la hauteur de la colonne, garantissant ainsi une continuité verticale dans la distribution de l'air à l'intérieur des cloisons centrales 50.

Les figures 11 à 14 illustrent plusieurs modules 1, avec des cloisons centrales 50, superposés en une colonne verticale. Comme visible sur les figures 11 à13 et également sur la figure 7, du fait de la présence des cloisons centrales 50, les parois de retenue 41, 42 sont moins larges que celles employées dans les modules 1 sans cloisons centrales 50.

Comme visible sur les figures 7 et 11, un module 1, avec les cloisons centrales 50, comporte une paroi de retenue intermédiaire 41 présentant un premier bord longitudinal engagé et maintenu dans les fentes des pièces fendues 25 des deux montants 203 ou 213 d'un même cadre 20, 21, et un second bord longitudinal libre, cette paroi de retenue intermédiaire 41 présentant une largeur qui est inférieure à la distance entre ce cadre et la cloison centrale 50 directement en vis-à-vis de ce cadre, de sorte que la paroi de retenue intermédiaire 41 s'étend à partir de ce cadre sans atteindre cette cloison centrale 50 directement en vis-à-vis de ce cadre.

Il est envisageable que chaque module 1, avec les cloisons centrales 50, comprend deux parois de retenue intermédiaire 41, l'une étant fixée sur les montants 203 du cadre avant 20 et l'autre étant fixée sur les montants 213 du cadre arrière 21.

Il est prévu, comme visible sur les figures 7 et 11, qu'un module 1, avec les cloisons centrales 50, comprend une ou deux parois de retenue supérieure 42 supportées par les rebords internes 26 des deux traverses supérieures 22, où chaque paroi de retenue supérieure 42 présente un premier bord longitudinal sensiblement jointif d'une cloison centrale 50. Ainsi, une telle paroi de retenue supérieure 42 n'est pas superposée verticalement directement au-dessus d'une paroi de retenue intermédiaire 41 du module 1 situé au-dessus, et n'est pas non plus superposée verticalement directement en-dessous d'une paroi de retenue intermédiaire 41 du même module 1.

De cette manière, la continuité verticale de la distribution du substrat SU est réalisée en contournant les parois de retenue 41, 42, à la fois dans les sous-compartiments arrière 11 et dans les sous-compartiments avant 12 superposés verticalement.

Dans une variante non illustrée, il est envisageable de prévoir des pièces fendues sur les faces externes des cloisons centrales 50 (autrement dit les faces au contact du substrat SU), afin de recevoir des parois de retenue sur ces cloisons centrales 50.

En référence à la figure 12, dans le cas où les cloisons centrales 50 forment un plenum central 5, il est prévu :
- pour le module 1 du haut, un bloc de mousse 56 est disposé sur les paliers bas 55 de ses cloisons centrales 50, du substrat SU étant placé entre les cloisons centrales 50 au-dessus du bloc ce mousse 56 ;
- pour le module 1 du bas (qui est également visible sur la figure 8), une paroi de fond 70 est montée sur le cadre 2, et recouvre entièrement la face inférieure 33, les cloisons centrales 50 sont montées sur cette paroi de fond 70, et un bloc de mousse 56 est disposé sur la paroi de fond 70, entre les cloisons centrales 50 et en-dessous des paliers bas 55.

Le ou les conduits 60 sont disposés à l'intérieur de ce bloc de mousse 56. Une conduite d'arrivée d'eau 71 peut également être placée à l'intérieur de ce bloc de mousse 56, afin d'alimenter les tuyaux 72 d'irrigation.

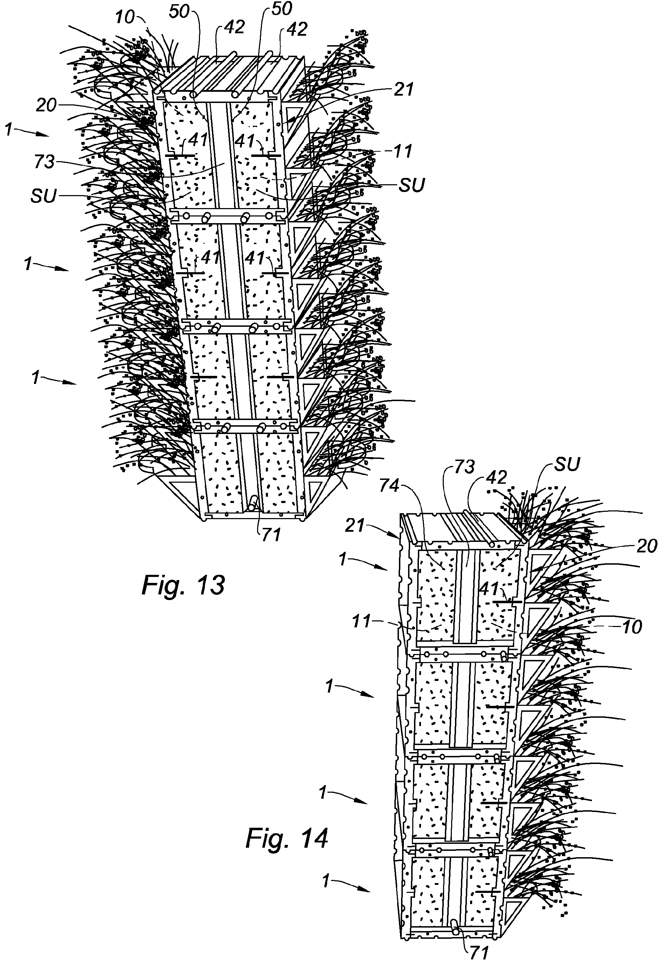

En référence à la figure 13, les cloisons centrales 50 peuvent recevoir intérieurement un isolant 73 sur toute la hauteur de chaque module 1, du substrat SU étant incorporé dans le sous-compartiment arrière 11 et le sous-compartiment avant 10 de chaque module 1, de sorte que la croissance des cultures végétales est réalisée sur les deux faces avant et arrière de chaque module 1. Les parois de retenue 41, 42 sont prévues dans le sous-compartiment arrière 11 et dans le sous-compartiment avant 10.

En référence à la figure 14, les cloisons centrales 50 peuvent recevoir intérieurement un isolant 73 sur toute la hauteur de chaque module 1, du substrat SU étant incorporé dans le sous-compartiment avant 10, tandis que le sous-compartiment arrière 11 reçoit intérieurement du béton 74, de sorte que la croissance des cultures végétales est réalisée uniquement sur la face avant de chaque module 1. Les parois de retenue 41, 42 sont prévues uniquement dans le sous-compartiment avant 10.

## Revendications

1. Module (1) de culture végétale pour l'érection d'une structure modulaire pour mur végétalisé, ledit module (1) comprenant :
- un casier (2) prévu pour recevoir intérieurement un substrat (SU) de culture végétale ; et
- au moins deux parois de retenue (41, 42), où chaque paroi de retenue (41; 42) est perméable, notamment en étant du type paroi grillagée, poreuse ou ajourée, et est portée par le casier (2) pour former une étagère de retenue du substrat (SU) ;
ledit module (1) étant **caractérisé en ce que** :
- le casier (2) présente un cadre avant (20) et un cadre arrière (21) en vis-à-vis et délimitant respectivement une face avant (30) et une face arrière (31), où le cadre avant (20) et le cadre arrière (21) présentent chacun deux poutres respectivement inférieure (202; 212) et supérieure (201 ; 211) reliées par deux montants latéraux (203 ; 213) opposés, lesdits cadres (20, 21) étant reliés par deux traverses supérieures (22) et deux traverses inférieures (23) délimitant avec lesdits cadres (20, 21) une face inférieure (33), une face supérieure (32) et des faces latérales (34), lesdites traverses supérieures et inférieures (22, 23) s'étendant entre les extrémités respectives des poutres supérieures (201, 211) et des poutres inférieures (202, 212) respectivement ;
- chaque paroi de retenue (41; 42) présente des premier et second bords dits longitudinaux opposés et présente une largeur (LP) prise entre ses premier et second bords longitudinaux qui est inférieure à la distance (LA) entre lesdits cadres (20, 21) ;
- l'une au moins des parois de retenue (41, 42) présente un premier bord longitudinal monté sur l'un des cadres (20, 21) et un second bord longitudinal libre, de sorte que ladite paroi de retenue (41; 42) s'étend à partir de l'un des cadres (20 ; 21) sans atteindre l'autre cadre (21 ; 20) ; et
- les deux parois de retenue (41, 42) sont décalées à la fois selon une direction verticale orthogonale aux faces inférieure et supérieure (33, 32) et selon une direction transversale orthogonale aux faces avant et arrière (30, 31).

2. Module (1) selon la revendication 1, dans lequel les montants latéraux (203, 213) des cadres (20, 21) présentent des éléments de support (25) conformés pour soutenir une paroi de retenue (41), et où au moins une paroi de retenue dite intermédiaire (41) présente un premier bord longitudinal soutenu par les deux montants latéraux (203 ; 213) d'un même cadre (20 ; 21) au moyen desdits éléments de support (25).

3. Module (1) selon la revendication 2, dans lequel chaque élément de support est constitué d'une pièce fendue (25) solidaire du montant latéral (203 ; 213) concerné et délimitant une fente de réception d'un premier bord longitudinal d'une paroi de retenue intermédiaire (41), ladite paroi de retenue intermédiaire (41) présentant un premier bord longitudinal engagé dans les fentes des pièces fendues (25) des deux montants latéraux (203 ; 213) d'un même cadre (20 ; 21).

4. Module (1) selon les revendications 2 ou 3, dans lequel les éléments de support (25) sont prévus sensiblement à mi-hauteur entre les faces inférieure et supérieure (33, 32) du casier (2).

5. Module (1) selon l'une quelconque des revendications précédentes, dans lequel les poutres supérieures (201, 211) des deux cadres (20, 21) et les traverses supérieures (22) présentent des rebords internes (26) sensiblement coplanaires et définissant ensemble un palier interne de support d'une paroi de retenue dite supérieure (42).

6. Module (1) selon les revendications 2 et 5, dans lequel une paroi de retenue intermédiaire (41) présente un premier bord longitudinal soutenu par les deux montants latéraux (203 ; 213) de l'un des cadres (20, 21), et une paroi de retenue supérieure (42) présente un premier bord longitudinal reposant sur le rebord interne (26) d'une poutre supérieure (201 ; 211) de l'autre cadre (20 ; 21) et présente également deux bords latéraux opposés reposant sur les rebords internes (26) respectifs des traverses supérieures (22), de sorte que ces deux parois de retenue (41, 42) ne sont pas superposées verticalement directement l'une au-dessus de l'autre.

7. Module (1) selon la revendication 6, dans lequel la largeur (LP) de chaque paroi de retenue (41; 42) est comprise entre environ 0,35 et 0,65 fois la distance (LA) entre les deux cadres (20, 21), et de préférence entre 0,45 et 0,55 fois la distance (LA) entre les deux cadres (20, 21).

8. Module (1) selon les revendications 2 et 5, comprenant en outre deux cloisons centrales (50) s'étendant à l'intérieur du casier (2) entre ses traverses inférieures et supérieures (23, 22) et de manière substantiellement parallèle aux faces arrière et avant (31, 30), lesdites cloisons centrales (50) étant situées à distance des deux cadres (20, 21) et délimitant entre elles un espace central (51) dénué de substrat, et dans lequel chaque paroi de retenue (41; 42) présente une largeur qui est inférieure à la distance entre un cadre (20 ; 21) et la cloison centrale (50) directement en vis-à-vis dudit cadre (20; 21), et une paroi de retenue intermédiaire (41) présente un premier bord longitudinal soutenu par les deux montants latéraux (203 ; 213) de l'un des cadres (20, 21) et un second bord longitudinal libre de sorte que ladite paroi de retenue intermédiaire (41) s'étend à partir de l'un des cadres (20, 21) sans atteindre ladite cloison centrale (50) directement en vis-à-vis dudit cadre (20 ; 21), et une paroi de retenue supérieure (42) présente un premier bord longitudinal sensiblement jointif de ladite cloison centrale (50) et présente également deux bords latéraux opposés reposant sur les rebords internes (26) respectifs des traverses supérieures (22), de sorte que ces deux parois de retenue (41, 42) ne pas superposées verticalement directement l'une au-dessus de l'autre.

9. Module (1) selon la revendication 8, dans lequel une paroi de retenue intermédiaire (41) est supportée par le cadre arrière (21) et s'étend sans atteindre la cloison centrale (50) directement en vis-à-vis dudit cadre arrière (21), et une autre paroi de retenue intermédiaire (41) est supportée par le cadre avant (20) et s'étend sans atteindre l'autre cloison centrale (50) directement en vis-à-vis dudit cadre avant (20).

10. Module (1) selon les revendications 8 ou 9, dans lequel la largeur (LP) de chaque paroi de retenue (41; 42) est comprise entre environ 0,35 et 0,65 fois la distance entre un cadre (20 ; 21) et la cloison centrale (50) directement en vis-à-vis dudit cadre (20 ; 21), et de préférence entre 0,45 et 0,55 fois cette distance entre un cadre (20 ; 21) et la cloison centrale (50) directement en vis-à-vis dudit cadre (20 ; 21).

11. Structure modulaire de mur végétalisé, ladite structure comprenant plusieurs modules (1) conformes à l'une quelconque des revendications précédentes, lesdits modules (1) étant juxtaposés en au moins une rangée horizontale et/ou superposés en au moins une colonne verticale.

12. Structure modulaire selon la revendication 11, dans laquelle au moins deux modules (1) sont juxtaposés et présentent des parois de retenue (41, 42) respectives substantiellement coplanaires, et de préférence jointives.

13. Structure modulaire selon les revendications 11 ou 12, dans laquelle au moins deux modules (1) sont superposés et présentent des parois de retenue (41, 42) voisines respectives décalées verticalement et transversalement, de sorte que ces deux parois de retenue (41, 42) voisines ne sont pas superposées verticalement directement l'une au-dessus de l'autre.

## Patentansprüche

1. Pflanzenkultivierungsmodul (1) für die Errichtung einer modularen Struktur für eine begrünte Wand, wobei das Modul (1) umfasst:
- einen Kasten (2), der vorgesehen ist, um innen ein Pflanzenkultursubstrat (SU) aufzunehmen, und
- mindestens zwei Rückhaltewände (41, 42), wobei jede Rückhaltewand (41; 42) durchlässig ist, insbesondere, indem sie vom Typ Gitter-, poröse oder durchbrochene Wand ist, und von dem Kasten (2) getragen wird, um ein Rückhaltebord des Substrats (SU) zu bilden;
wobei das Modul (1) **dadurch gekennzeichnet ist, dass**:
- der Kasten (2) einen vorderen Rahmen (20) und einen hinteren Rahmen (21) aufweist, die einander zugewandt sind und jeweils eine vordere Fläche (30) und eine hintere Fläche (31) begrenzen, wobei der vordere Rahmen (20) und der hintere Rahmen (21) jeweils zwei jeweilige untere (202, 212) und obere (201; 211) Balken aufweisen, die durch zwei gegenüberliegende seitliche Pfosten (203; 213) verbunden sind, wobei die Rahmen (20, 21) durch zwei obere Querträger (22) und zwei untere Querträger (23) verbunden sind, die mit den Rahmen (20, 21) eine untere Fläche (33), eine obere Fläche (32) und Seitenflächen (34) begrenzen; wobei sich die oberen und unteren Querträger (22, 23) zwischen den jeweiligen Enden jeweils der oberen Balken (201, 211) und der unteren Balken (202, 212) erstrecken;
- jede Rückhaltewand (41; 42) einen ersten und zweiten Längsrand aufweist, die gegenüberliegen und eine Breite (LP) aufweisen, gemessen zwischen ihrer ersten und zweiten Längswand, die kleiner als der Abstand (LA) zwischen den Rahmen (20, 21) ist;
- mindestens eine der Rückhaltewände (41, 42) einen ersten Längsrand aufweist, der auf einem der Rahmen (20, 21) angebracht ist, und einen freien zweiten Längsrand, so dass sich die Rückhaltewand (41; 42) ab dem einen der Rahmen (20; 21) erstreckt, ohne den anderen Rahmen (21; 20) zu erreichen; und
- die zwei Rückhaltewände (41, 42) sowohl gemäß einer vertikalen Richtung, die orthogonal zu der unteren und oberen Fläche (33, 32) ist, als auch gemäß einer transversalen Richtung, die orthogonal zu der vorderen und hinteren Fläche (30, 31) ist, versetzt sind.

2. Modul (1) nach Anspruch 1, wobei die seitlichen Pfosten (203, 213) der Rahmen (20, 21) Stützelemente (25) aufweisen, die ausgebildet sind, um eine Rückhaltewand (41) zu stützen, und wobei mindestens eine mittlere Rückhaltewand (41) einen ersten Längsrand aufweist, der von den zwei seitlichen Pfosten (203; 213) desselben Rahmens (20; 21) mittels der Stützelemente (25) gestützt wird.

3. Modul (1) nach Anspruch 2, wobei jedes Stützelement aus einem geschlitzten Teil (25) besteht, das mit dem entsprechenden seitlichen Pfosten (203; 213) fest verbunden ist und einen Aufnahmeschlitz eines ersten Längsrands einer mittleren Rückhaltewand (41) begrenzt, wobei die mittlere Rückhaltewand (41) einen ersten Längsrand aufweist, der in die Schlitze der geschlitzten Teile (25) der zwei seitlichen Pfosten (203; 213) desselben Rahmens (20; 21) eingesetzt ist.

4. Modul (1) nach den Ansprüchen 2 oder 3, wobei die Stützelemente (25) etwa in halber Höhe zwischen der unteren und oberen Fläche (33, 32) des Kastens (2) vorgesehen sind.

5. Modul (1) nach einem der vorangehenden Ansprüche, wobei die oberen Balken (201, 211) der zwei Rahmen (20, 21) und die oberen Querträger (22) innere Kanten (26) aufweisen, die etwa koplanar sind und gemeinsam einen inneren Stützabsatz einer oberen Rückhaltewand (42) definieren.

6. Modul (1) nach den Ansprüchen 2 und 5, wobei eine mittlere Rückhaltewand (41) einen ersten Längsrand aufweist, der von den zwei seitlichen Pfosten (203; 213) von einem der Rahmen (20, 21) gestützt wird, und eine obere Rückhaltewand (42) einen ersten Längsrand aufweist, der auf der inneren Kante (26) eines oberen Balkens (201; 211) des anderen Rahmens (20; 21) ruht und ebenfalls zwei gegenüberliegende seitliche Ränder aufweist, die auf den jeweiligen inneren Kanten (26) der oberen Querträger (22) ruhen, so dass diese zwei Rückhaltewände (41, 42) vertikal nicht direkt übereinander liegen.

7. Modul (1) nach Anspruch 6, wobei die Breite (LP) jeder Rückhaltewand (41; 42) zwischen zirka dem 0,35- und 0,65-fachen des Abstands (LA) zwischen den zwei Rahmen (20, 21) und vorzugsweise zwischen zirka dem 0,45- und 0,55-fachen des Abstands (LA) zwischen den zwei Rahmen (20, 21) liegt.

8. Modul (1) nach den Ansprüchen 2 und 5, umfassend ferner zwei zentrale Trennwände (50), die sich im Inneren des Kastens (2) zwischen seinen unteren und oberen Querträgern (23, 22) und substantiell parallel zu der hinteren und vorderen Fläche (31, 30) erstrecken, wobei sich die zentralen Trennwände (50) beabstandet von den zwei Rahmen (20, 21) befinden und zwischen sich einen zentralen Raum (51) ohne Substrat begrenzen, und wobei jede Rückhaltewand (41; 42) eine Breite aufweist, die kleiner als der Abstand zwischen einem Rahmen (20; 21) und der zentralen Trennwand (50) ist, die direkt dem Rahmen (20; 21) zugewandt ist, und eine mittlere Rückhaltewand (41) einen ersten Längsrand aufweist, der von den zwei seitlichen Pfosten (203; 213) von einem der Rahmen (20, 21) gestützt wird und einen freien zweiten Längsrand, so dass sich die mittlere Rückhaltewand (41) ab dem einen der Rahmen (20, 21) erstreckt, ohne die zentrale Trennwand (50) zu erreichen, die direkt dem Rahmen (20; 21) zugewandt ist, und die obere Rückhaltewand (42) einen ersten Längsrand aufweist, der etwa fugendicht mit der zentralen Trennwand (50) ist und ebenfalls zwei gegenüberliegende seitliche Ränder aufweist, die auf den jeweiligen inneren Kanten (26) der oberen Querträger (22) ruhen, so dass diese zwei Rückhaltewände (41, 42) vertikal nicht direkt übereinander liegen.

9. Modul (1) nach Anspruch 8, wobei eine mittlere Rückhaltewand (41) von dem hinteren Rahmen (21) gestützt wird und sich, ohne die zentrale Trennwand (50) zu erreichen, direkt dem hinteren Rahmen (21) zugewandt erstreckt, und eine andere mittlere Rückhaltewand (41) von dem vorderen Rahmen (20) gestützt wird und sich, ohne die andere zentrale Trennwand (50) zu erreichen, direkt dem vorderen Rahmen (20) zugewandt erstreckt.

10. Modul (1) nach den Ansprüchen 8 oder 9, wobei die Breite (LP) jeder Rückhaltewand (41; 42) zwischen zirka dem 0,35- und 0,65-fachen des Abstands zwischen einem Rahmen (20; 21) und der zentralen Trennwand (50) liegt, die direkt dem Rahmen (20; 21) zugewandt ist, und vorzugsweise zwischen dem 0,45- und 0,55-fachen dieses Abstand zwischen einem Rahmen (20; 21) und der zentralen Trennwand (50), die direkt dem Rahmen (20; 21) zugewandt ist.

11. Modulare Struktur einer begrünten Wand, wobei die Struktur mehrere Module (1) umfasst, die nach einem der vorangehenden Ansprüche ausgebildet sind, wobei die Module (1) in mindestens einer horizontalen Reihe nebeneinander und/oder in mindestens einer vertikalen Säule übereinander liegen.

12. Modulare Struktur nach Anspruch 11, wobei mindestens zwei Module (1) nebeneinander liegen und jeweilige substantiell koplanare und vorzugsweise fugendichte Rückhaltewände (41, 42) aufweisen.

13. Modulare Struktur nach den Ansprüchen 11 oder 12, wobei mindestens zwei Module (1) übereinander liegen und jeweilige benachbarte Rückhaltewände (41, 42) aufweisen, die vertikal und transversal versetzt sind, so dass diese zwei benachbarten Rückhaltewände (41, 42) vertikal nicht direkt übereinander liegen.

## Claims

1. A plant culture module (1) for erecting a modular structure for a green wall, said module (1) comprising:
- a rack (2) provided to internally receive a substrate (SU) of plant culture; and
- at least two retaining walls (41, 42), where each retaining wall (41; 42) is permeable, in particular by being of the grid, porous or perforated wall type, and is carried by the rack (2) to form a shelf for retaining the substrate (SU);
said module (1) being **characterized in that**:
- the rack (2) has a front frame (20) and a rear frame (21) facing each other and delimiting respectively a front face (30) and a rear face (31), where the front frame (20) and the rear frame (21) each have respectively two lower (202; 212) and upper (201; 211) beams, connected by two opposite lateral uprights (203; 213), said frames (20, 21) being connected by two upper cross members and two lower cross members (22, 23) delimiting with said frames (20, 21) a lower face (33), an upper face (32) and lateral faces (34), said upper and lower cross members (22, 23) extending between the respective ends of the upper beams (201, 211) and the lower beams (202, 212) respectively;
- each retaining wall (41; 42) has first and second edges called opposite longitudinal edges and has a width (LP) taken between its first and second longitudinal edges which is lower than the distance (LA) between said frames (20, 21);
- at least one of the retaining walls (41, 42) has a first longitudinal edge mounted on one of the frames (20, 21) and a second free longitudinal edge, so that said retaining wall (41; 42) extends from one of the frames (20; 21) without reaching the other frame (21; 20); and
- the two retaining walls (41, 42) are both offset according to a vertical direction orthogonal to the lower and upper faces (33, 32) and according to a transverse direction orthogonal to the front and rear faces (30, 31).

2. The module according to claim 1, wherein the lateral uprights (203, 213) of the frames (20, 21) have support elements (25) shaped to support a retaining wall (41), and where at least one retaining wall called intermediate wall (41) has a first longitudinal edge supported by the two lateral uprights (203; 213) of a same frame (20; 21) by means of said support elements (25).

3. The module (1) according to claim 2, wherein each support element consists of a split part (25) secured to the concerned lateral upright (203; 213) and delimiting a slot for receiving a first longitudinal edge of an intermediate retaining wall (41), said intermediate retaining wall (41) having a first longitudinal edge engaged in the slots of the split parts (25) of the two lateral uprights (203; 213) of a same frame (20; 21).

4. The module (1) according to claims 2 or 3, wherein the support elements (25) are provided substantially at mid-height between the lower and upper faces (33, 32) of the rack (2).

5. The module (1) according to any one of the preceding claims, wherein the upper beams (201, 211) of the two frames (20, 21) and the upper cross members (22) have substantially coplanar inner flanges (26) and defining together an inner bearing for supporting a retaining wall called upper wall (42).

6. The module (1) according to claims 2 and 5, wherein an intermediate retaining wall (41) has a first longitudinal edge supported by the two lateral uprights (203; 213) of one of the frames (20, 21) and an upper retaining wall (42) has a first longitudinal edge resting on the inner flange (26) of an upper beam (201; 211) of the other frame (20; 21) and also has two opposite lateral edges resting on the respective inner flanges (26) of the upper cross members (22), so that these two retaining walls (41, 42) are not vertically superimposed directly one above the other.

7. The module (1) according to claim 6, wherein the width (LP) of each retaining wall (41; 42) is comprised between about 0.35 and 0.65 times the distance (LA) between the two frames (20, 21), and preferably between 0.45 and 0.55 times the distance (LA) between the two frames (20, 21).

8. The module (1) according to claims 2 and 5, further comprising two central partition walls (50) extending inside the rack (2) between its lower and upper cross members (23, 22) and substantially parallel to the rear and front faces (31, 30), said central partition walls (50) being located at a distance from the two frames (20, 21) and delimiting between them a central space (51) devoid of substrate, and in which each retaining wall (41; 42) has a width which is less than the distance between a frame (20; 21) and the central partition wall (50) directly facing said frame (20; 21) and an intermediate retaining wall (41) has a first longitudinal edge supported by the two lateral uprights (203; 213) of one of the frames (20, 21) and a second free longitudinal edge so that said intermediate retaining wall (41) extends from one of the frames (20, 21) without reaching said central partition (50) directly facing said frame (20; 21), and an upper retaining wall (42) has a first longitudinal edge substantially jointed to said central partition (50) and also has two opposite lateral edges resting on the respective inner flanges (26) of the upper cross members (22), so that these two retaining walls (41, 42) are not vertically superimposed directly one above the other.

9. The module (1) according to claim 8, wherein an intermediate retaining wall (41) is supported by the rear frame (21) and extends without reaching the central partition wall (50) directly facing said rear frame (21), and another intermediate retaining wall (41) is supported by the front frame (20) and extends without reaching the other central partition wall (50) directly facing said front frame (20).

10. The module (1) according to claims 8 or 9, wherein the width (LP) of each retaining wall (41; 42) is comprised between about 0.35 and 0.65 times the distance between a frame (20; 21) and the central partition wall (50) directly facing said frame (20; 21), and preferably between 0.45 and 0.55 times this distance between a frame (20; 21) and the central partition wall (50) directly facing said frame (20; 21).

11. A modular structure of a green wall, said structure comprising several modules (1) in accordance with any one of the preceding claims, said modules (1) being juxtaposed in at least one horizontal row and/or superimposed in at least one vertical column.

12. The modular structure according to claim 11, wherein at least two modules (1) are juxtaposed and have respective retaining walls (41, 42) substantially coplanar, and preferably jointed.

13. The modular structure according to claims 11 or 12, wherein at least two modules (1) are superimposed and have respective adjacent retaining walls (41, 42) which are vertically and transversely offset, so that these two adjacent retaining walls (41, 42) are not vertically superimposed directly one above the other.
